(19) Europäisches Patentamt / European Patent Office / Office européen des brevets

(11) **EP 3 332 115 B1**

(12) **FASCICULE DE BREVET EUROPEEN**

(45) Date de publication et mention de la délivrance du brevet:
**08.04.2020 Bulletin 2020/15**

(21) Numéro de dépôt: **15734424.3**

(22) Date de dépôt: **21.05.2015**

(51) Int Cl.:
**F03B 17/06** *(2006.01)*

(86) Numéro de dépôt international:
**PCT/FR2015/051346**

(87) Numéro de publication internationale:
**WO 2016/185101 (24.11.2016 Gazette 2016/47)**

(54) **DISPOSITIF DE PRODUCTION D'ÉLECTRICITÉ A PARTIR D'ÉCOULEMENTS DE FLUIDE LIQUIDE**

VORRICHTUNG ZUR ERZEUGUNG VON ELEKTRIZITÄT AUS STRÖMEN VON FLÜSSIGEM FLUID

DEVICE FOR PRODUCING ELECTRICITY FROM FLOWS OF LIQUID FLUID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**13.06.2018 Bulletin 2018/24**

(73) Titulaire: **Helios Gem**
**75008 Paris (FR)**

(72) Inventeurs:
• **REBBOAH, Philippe**
**24220 Saint Cyprien (FR)**
• **COIRO, Dominico**
**80078 Pozzuoli (IT)**
• **MORRONE, Nicola**
**86048 Sant Elia a Pianisi (IT)**

(74) Mandataire: **Ipside**
**29, rue de Lisbonne**
**75008 Paris (FR)**

(56) Documents cités:
**WO-A1-81/00595     US-A- 3 986 787**

**Description**

La présente invention concerne une hydrolienne, ou station pour la production d'énergie électrique spécialement adaptée pour être actionnée par le flux des courants d'eau d'intensités variables tels que les courants des marées, et plus généralement tous types de courants marins et fluviaux. Le dispositif (ou station) de l'invention ne se positionne ni au fond de l'eau ni en surface de l'eau (mer ou fleuve) mais néanmoins immergé totalement, et est associé à un système d'ancrage.

Il existe de nombreuses configurations d'hydroliennes, par exemple montrées par les brevets US 3 986 787, US 2007/241566 A1, US 6 168 373 B1, GB 2 460 309, US 2 501 696.

Cependant, aucun de ces systèmes connus ne permet de répondre simultanément à toutes les conditions et exigences de fonctionnement d'une hydrolienne, à savoir :

- la stabilité à une profondeur donnée ;
- une orientation optimale face au courant ;
- l'attitude à être activée par des courants faibles, autrement dit, à partir d'un seul courant le plus faible possible ;
- l'absence de vibrations ;
- les facilités d'accès en cas de réparation ou de maintenance.

La présente invention remédie à ces inconvénients et concilie ces contraintes contradictoires.

A cette fin selon l'invention, le dispositif du type hydrolienne, activée par un courant de fluide liquide, tel que des courants marins ou fluviaux, pour produire de l'énergie électrique, comportant :

- une coque flottante ;
- au moins une turbine susceptible d'être entrainée en rotation par le fluide en mouvement ;
- un générateur d'électricité entrainé par la turbine et apte à être relié à un réseau de distribution d'électricité ;

est caractérisé en ce qu'il comporte au moins un diffuseur (formant un mélangeur de flux), de forme annulaire centré sur la turbine et entourant celle-ci.

Selon l'invention, le dispositif comporte deux turbines contre-rotatives et comprenant au moins deux pâles chacune, entourée chacune par un diffuseur annulaire.

La dite coque flottante :

- est en forme de fuselage et est reliée à chaque turbine par un bras ou aile ;
- comporte à l'arrière un empennage inversé ;
- est composée d'au moins trois parties, à savoir d'une part une partie principale centrale, creuse et étanche, et d'autre part au moins deux parties périphériques, à la proue et à la poupe et agissant comme des flotteurs.

De préférence, à la base du diffuseur, est disposé un élément composé de lamelles, formant un second diffuseur, et de dimension inférieure au premier diffuseur.

Le dispositif comporte un moyen d'ancrage sur le fond marin ou le lit du fleuve, comportant un bloc submersible, comprenant au moins un compartiment pouvant être rempli d'eau, et la coque flottante est attachée au moyen d'ancrage par deux câbles fixés symétriquement sur les flancs de la coque, de façon à permettre rotation de la coque sur elle-même en vue de son orientation automatique dans le sens du courant, et le retour de celle-ci à sa position initiale lorsque l'intensité du courant faiblit sous l'effet de la force de torsion qui s'exerce sur les deux câbles.

De plus, le dispositif comporte un système de pilotage automatique permettant de positionner automatiquement le dispositif à une profondeur optimale déterminée à partir de la collecte de données relatives aux courants aux moyens de capteurs, tels que ADCP (acoustic doppler current profiler), ou mesurant la pression, l'intensité du courant, la vitesse du courant.

Le dispositif de l'invention comporte une coque principale étanche, flottante, effilée de forme hydrodynamique adoptant la silhouette d'un requin, à laquelle sont fixés symétriquement sur ses flancs, deux tiges profilées comme les nageoires pectorales du requin, allongées et étroites.

Les formes du châssis, du flotteur et des autres composantes du corps de la station sont spécialement conçues et profilées afin de réagir de façon naturelle aux perturbations conjuguées des courants contraires, tangages et roulis. La coque arrière revêt la forme d'un empennage renversé. Tout cela a pour effet d'accroître l'hydrodynamisme, une diminution des pertes d'énergie du courant et une plus grande portance et stabilité de la station qui sous l'effet de la poussée de flottaison vient contrer le roulis, le tangage et les turbulences.

A l'intérieur de la coque, un treuil est installé, autour duquel est enroulé un câble d'amarrage ; l'autre extrémité de la ligne d'amarrage est fixée à un bloc d'ancrage posé sur le fond marin, de poids suffisant pour maintenir la station complètement immergée, même quand elle est soumise à de forts courants.

L'ensemble des caractéristiques du dispositif, sa forme, son centre de gravité, son centre de flottaison et son point de fixation de câble d'amarrage, est conçu pour lui permettre de maintenir une position parfaitement horizontale. En cas de mouvements imprévus de roulis ou de tangage, le dispositif maintient un axe intrinsèquement stable, et revient toujours à sa position originelle par lui même sans intervention extérieure.

Aux extrémités des deux nageoires pectorales sont montés deux logements étanches contenant deux générateurs d'électricité, auxquels sont associés des multiplicateurs de tours, une turbine de chaque coté, ces turbines sont contrarotatives, possédant deux pâles ou plus. Autour de chaque turbine est fixé un convoyeur de flux, appelé "diffuseur", ayant la forme d'un anneau aux bords avec un profil d'aile, dont la fonction est d'augmenter la circulation du courant d'eau vers les aubes de la turbine, de manière à améliorer l'efficacité de conversion d'énergie équivalent à un travail d'environ deux fois à celui effectué par la longueur des pales.

L'électricité produite par les générateurs, après avoir été régulée au moyen d'appareils électroniques situés sur des panneaux électriques installés à l'intérieur de la coque principale, est transmise au réseau terrestre par un câble multipolaire glissant le long du câble d'amarrage qui longe ensuite le fond marin pour rejoindre le point d'atterrage puis la station de transformation terrestre avant d'être distribué sur le réseau électrique principal du lieu.

La coque flottante est de préférence composée de deux ou plusieurs sections, à savoir une section principale centrale, étanche, accessible de l'extérieur au moyen d'une écoutille, et une, deux ou plusieurs sections périphériques.

La section principale a une double fonction, structurelle et de logement des appareils électromécaniques. Les sections périphériques, à la proue et à la poupe sont intrinsèque insubmersibles car remplies de mousse polymère, et ainsi capables de garantir la flottaison de l'ensemble de la station, y compris en cas d'inondation de la section centrale.

La forme spécifique de la coque permet son auto-alignement constant avec le courant d'eau principal, et cela, même en cas de faible intensité du courant. De fait, sans aucune intervention externe, la rotation des deux turbines est toujours en contre-rotation.

De plus, le dispositif est doté :

- d'un système d'auto contrôle de sa direction (SAD) ; le système SAD est constitué de capteurs spécifiques, de composants enregistrant les données collectées (log) à l'extérieur,
- d'une boussole magnétique et
- d'une plateforme inertielle, l'ensemble installé dans un logement étanche à l'intérieur de la coque principale, à distance suffisante de masses métalliques pour éviter toute interférence magnétique.

Les dits capteurs sont en mesure de déterminer la direction de l'axe principal de la coque en relation avec l'angle de magnétisme terrestre du lieu. De plus, ces capteurs transmettent des données pertinentes à l'ordinateur installé à bord, qui se charge de définir selon une récurrence préétablie, si l'orientation de la station est cohérente par rapport à la force du courant dominant du lieu.

Lorsque la force du courant d'eau est nulle ou faible, le dit ordinateur peut commander, en toute autonomie grâce à un programme informatique développé à cette fin, le démarrage d'une séquence activant la rotation d'une turbine, ou les deux en même temps, soit à fin de pré orienter la station en direction du courant dominant à venir, dont la récurrence aura été mise en évidence par les études de courants réalisées préalablement à l'immersion de la station, soit à fin de stabiliser la station en cas de turbulences imprévues.

Les mouvements de la station, ses angles de rotation et sa vitesse d'accélération produisent des données transmises à l'ordinateur de bord qui les interprète en pilotant constamment la plateforme inertielle.

Les changements de direction du courant sont sans importance pour le fonctionnement de la station. Celle-ci a été conçue pour adapter son orientation en fonction des changements de direction des courants. Les pales des turbines sont constamment orientées perpendiculairement au courant d'eau dominant.

La bathymétrie du lieu sélectionné importe peu : quelque soit la profondeur, il suffit d'envoyer par le fond un poids mort (bloc d'ancrage) auquel préalablement un câble d'une longueur suffisante aura été amarré par une extrémité. La seconde extrémité est fixée au treuil de la station.

Le site d'installation de la station, choisi pour la présence de courants, rend par définition difficile les manœuvres de plongeurs. La présente invention permet de s'affranchir de l'intervention de plongeur à chacune des phases d'installation, de maintenance et de réparation en cas de panne.

L'installation de la station sur le site sélectionné ne nécessite pas de créer une structure encombrante et couteuse ancrée sur le fond marin.

La présence des diffuseurs permet la mise en œuvre du mouvement rotatif des turbines en présence de courants de faible intensité, dès 0,8 m/s, de plus proportionnellement à la dimension choisie des pales, et en fonction de la force du courant. La turbine entubée dans le diffuseur démultiplie la quantité de l'énergie captée.

En situation de maintenance ou en cas de panne de la station nécessitant une réparation ou le remplacement d'un des composants mécaniques ou électroniques, il suffit d'activer le treuil à distance et faire remonter la station à la surface, de détacher la coque flottante des câbles auxquels elle est arrimée, puis de la remorquer vers le quai le plus proche où sont réalisées les opérations de maintenance. Ce procédé rend les interventions plus faciles et donc moins couteuses que dans les cas d'intervention en mer.

En cas de rupture inattendue du câble d'amarrage, la coque remontera d'elle-même à la surface puisqu'elle a une présente une flottabilité positive. De même, en cas d'avarie soudaine du treuil, il suffit de sectionner le ou les câbles d'amarrage pour laisser la station remonter à la surface.

L'utilisation des connaissances des courants permet de connaître la variation de leur mouvement dans le temps (marées) et leur différence d'intensité en fonction de la profondeur. La profondeur et l'orientation de la station sont programmables pour tenir compte de ces variables et obtenir ainsi une production d'énergie optimale.

La puissance de conversion de l'énergie cinétique captées des courants d'eau transformée en énergie mécanique, puis électrique produite par les turbines est fortement accrue grâce à l'ajout, autour des turbines des diffuseurs, un corps creux, à géométrie et parties conçues ad hoc, fixées au châssis. Les diffuseurs, en augmentant la portance du flux des eaux agissent sur les pales des turbines. Outre le fait d'améliorer la récupération d'énergie instantanément, ces diffuseurs permettent de déclencher la rotation des turbines en présence d'un courant d'eau plus faible. La station est donc opérationnelle dans tous les lieux possédant un courant minimum de 0,8 m/s (soit environ 1,56 nœud), ce qui correspond à quasiment toutes les mers du globe. Les diffuseurs, que l'on peut également appeler «accélérateurs de fluides », grâce à l'effet de leur portance, augmentent d'une part la masse du fluide dans l'unité de temps, et par ailleurs, augmentent la vitesse du fluide par rapport à sa vitesse originelle avant d'entrer dans le diffuseur. L'augmentation de l'efficacité est proportionnelle à la portance générée par le dit diffuseur. En effet, Si la portance du diffuseur est proportionnelle à la taille de l'aileron impliqué, la forme du diffuseur est un autre facteur qui détermine la capacité de portance du diffuseur (et des lamelles le composant). Par conséquent l'efficacité du mécanisme de diffusion résulte directement de la forme du diffuseur principal et du diffuseur secondaire (lamelles) situés sur l'axe de la turbine.

Il est notoirement admis que pour une turbine sans diffuseur, l'efficacité des pales sur le flux de l'eau diminue au fur et à mesure de son éloignement du cercle balayé par les pales. L'effet est contraire dans le cas d'une turbine équipée d'un diffuseur. Les filets d'eau les plus périphériques des pales sont balayés avec plus d'efficacité.

La station est équipée d'un système d'autogestion des opérations contrôlables à distance. Ce système est constitué par le fonctionnement en continu et en synergie de quatre différents systèmes électroniques, opérationnels sans interventions externes. Ces quatre systèmes sont :

Système d'autocontrôle de la profondeur,
Système d'autocontrôle de la position,
Système d'autocontrôle de la puissance,
Système d'autocontrôle de la génération électrique et de connexion au réseau.

Le système d'autocontrôle de la profondeur est asservi à des commutateurs de pression et divers instruments de mesure log, petit mécanisme de mesure, ADCP, capable de déterminer la profondeur de la station par rapport à la surface de la mer et la vitesse du courant d'eau en amont et en aval de la coque. Le système intervient chaque fois que l'operateur a l'intention de faire émerger ou immerger la station lors des mises en service ou lors des opérations de maintenance. Le système agit par ailleurs de manière autonome et automatiquement pour positionner la station au niveau de la profondeur prédéfinie ou, dans le but de maximiser l'énergie reçue en faisant varier la profondeur de la station selon la zone où sont détectés les courants les plus forts à un moment donné.

Le système d'autocontrôle de la position n'est pas activé lorsque la station est immergée dans un fleuve ou dans une zone dans laquelle les courants d'eau ont une direction constante. Le système d'autocontrôle de la position de la station est utilisé pour les sites où les courants sont soumis à l'influence des marées, généralement avec des changement de direction toutes les 6 ou 9 heures ; dans ce cas, le système est asservi à une boussole capable d'intégrer la position de l'axe principale de la station correspondant à l'axe magnétique du lieu ; le système se déclenche quand la vitesse du courant d'eau dominant s'est stabilisée sur une valeur inférieure à 0,5 m/s ; dans ce cas les turbines tournent sans entrainer les générateurs (librement sans couple). En corrélation avec l'angle de l'axe principal de la station et indiqué par la boussole, le système enclenche le mouvement d'une seule turbine provoquant une rotation de la station jusqu'au point d'orientation correspondant à l'orientation du prochain courant d'eau. Le nombre de tours induit par la turbine est contrôlé par une plateforme inertielle capable d'interpréter la vitesse et l'accélération angulaire subie par la station. Le système d'autocontrôle de la position évite l'enroulement du câble électrique avec la chaîne de sécurité et autour du câble d'amarrage.

Le système d'autocontrôle de la puissance intervient seulement quand la vitesse du courant d'eau dominant s'est stabilisée sur des niveaux supérieurs à 0,5 m/s ; en condition de génération d'électricité, le système adopte un fonctionnement routinier d'entrainement du couple. Selon le régime de rotation des turbines, le système augmente au fur et à mesure le couple de résistance des générateurs jusqu'au moment où le système relève une légère baisse de vitesse de rotation. Le système est asservi aux capteurs de position des deux générateurs.

Le système d'autocontrôle des générateurs électriques et de connexion au réseau est composé de deux convertisseurs électroniques triphasés alterné/continu (redresseur), un état en courant continu de filtrage et d'accouplement et un transformateur électronique triphasé continu/alternatif (convertisseur) piloté à partir du réseau terrestre ; l'énergie électrique produite par les deux générateurs est contrôlée en terme de tension, de phases et fréquences, et est couplée ;

L'électricité est ainsi transportée par le biais d'un câble électrique multipolaires prévu à cet effet, jusqu'à la station terrestre de transformation ; le câble électrique court le long du câble d'amarrage grâce à des anneaux. Une fois le système d'ancrage atteint, le câble électrique poursuit son cheminement jusqu'à le poste d'électricité terrestre.

Grace à son système d'autogestion à distance complètement autonome, la station est capable de choisir le pré-alignement avec le nouveau courant qui arrive, se placer à la meilleure profondeur, et établir le meilleur rapport du couple dans un but de conversion optimale de l'énergie cinétique. Dans le cas où une avarie devait se produire, la station actionne ses deux générateurs en mode « roue libre » en désolidarisant la rotation des pales de l'arbre et déroule automatiquement le câble du treuil pour remonter à la surface, tout en envoyant à la station de contrôle les données signalant l'anomalie.

Il est en outre prévu un système d'auto contrôle passif de l'orientation de la station. Ce système est constitué de deux câbles reliés au dispositif d'ancrage situé sur le fond marin assurant l'amarrage de la station. Ce système exclut la rotation de la station au-delà de 360 degrés par rapport à l'orientation initiale du courant, y compris en cas d'anomalie du système principal de contrôle de l'alignement. Cela permet de préserver l'intégrité et la fonctionnalité du câble électrique qui, sans ce dispositif, pourrait se rompre en s'enroulant à plusieurs tours sous l'effet d'une rotation incontrôlée de la station.

Le fonctionnement de la présente invention s'appuie sur les mêmes lois que celles applicables aux moulins à vent ou éoliennes, en particulier pour déterminer la puissance extraite d'un courant, d'un fluide en mouvement, il est possible d'utiliser la formule suivante :

$$P = 1/2 \; \square \; A \, v^3 \, C_p \, C_d \, K_{Betz}$$

Dans laquelle :

P est la puissance obtenue ;
$\square$ est la densité du fluide;
A est la superficie balayée par les pales de la turbine ;
V est la vitesse du courant
$C_p$ est un coefficient compris entre 0 et 1, qui indique l'efficience de la turbine (en fonction de plusieurs paramètres comme le nombre de pales, de leur forme, de leur niveau de rugosité, des caractéristiques du fond marin qui influence le courant d'eau, etc....) ;
$C_d$ est un coefficient supérieur à 1 indiquant l'incrémentation de puissance provoquée par la présence du diffuseur ;
$K_{Betz}$ est le coefficient sans dimension déterminé en 1919 par le physicien allemand Albert Betz, d'une valeur égale à 16/27, qui définit la valeur théorique maximum de l'énergie obtenue par un moulin à vent.

Les expériences réalisées à ce jour sur des prototypes de la présente invention, ont permis de confirmer la validité de l'équation susmentionnée en obtenant les valeurs suivantes :

Le produit de « Cp x Kbetz » atteint généralement la valeur 0,5 ;
En présence d'un diffuseur conçu selon un certain profil, Cd =2 ;
Le doublement de la vitesse du courant d'eau, accroit de 8 fois la puissance recueillie ;
Le doublement de la longueur des pales, accroit par 4 fois la puissance recueillie ;
La vitesse du courant minimum nécessaire pour mettre en mouvement la turbine, avec les pales correctement profilées, est d'environ 0,8 m/s (soit environ 1,56 nœud).

Pour toutes les configurations, les dimensions des pales varient de 2,5 m à 5 m et plus ; « R » traduit la longueur des pales. Les dimensions d'encombrement sont les suivantes :

| | |
|---|---|
| De face | 6 - 7 R |
| Hauteur | 3 - 4 R |
| Longueur | 6 - 9 R |

La présente invention peut fonctionner avec des courants d'eau d'une vitesse minimum de 0,8 m/s jusqu'à 4 m/s sans modification structurelle ; en fonction de la longueur des pales et de la vitesse du courant d'eau, la puissance électrique en entrée varie de 50 kW à 2 MW et plus.

La présente invention sera mieux comprise à la lecture de la description détaillée qui suit réalisée sur la base des dessins annexés dans lesquels :

La figure 1 montre par une vue isométrique l'ensemble du dispositif objet de la présente invention.

La figure 2 montre le même dispositif connecté au réseau électrique situé à terre ;

La figure 3 illustre les parties que l'on trouve à l'intérieure du corps principal de station ;

La figure 4 montre une variante simple de la configuration standard, obtenue par la présence de deux câbles d'amarrage ;

La figure 5 illustre l'utilisation d'un double treuil nécessité par la rétention de la station par deux câbles d'amarrage ;

La figure 6 montre la position adoptée par la station lorsque qu'elle est retenue par deux câbles d'amarrage et sous l'effet de la poussée exercée par un courant de direction opposée au courant initial ;

La figure 7 montre l'emplacement où se trouve le générateur électrique permettant de transformer l'énergie cinétique en électricité ;

Les figures 8, 9, 10, 11, 12 et, 13 montrent les vues de face, du dessus et de côté du dispositif objet de la présente invention, dans les deux configurations d'amarrage, avec un, puis deux câbles d'amarrage ;

La figure 14 illustre le diffuseur doté de l'élément composé de lamelles ;

La figure 15 illustre le diffuseur sans l'élément composé de lamelles ;

La figure 16 illustre une section du couple élément composé de lamelles/diffuseur ce qui permet de rendre compte de leur position respective ;

La figure 17 montre l'utilisation d'un anneau d'ancrage fixé à un plot lui-même ancré sur le fond marin en remplacement de l'utilisation d'un poids mort ;

Les figures 18 et 19 illustrent les filets d'eau en amont et en aval des turbines dans leur version entubée du diffuseur et sans diffuseur ;

Les figures 20A et 20B sont des schémas respectivement de dessus et de côté du système d'ancrage ;

Les figures 21 à 24 sont des vue schématiques de côté d'une station à différentes étapes de son installation.

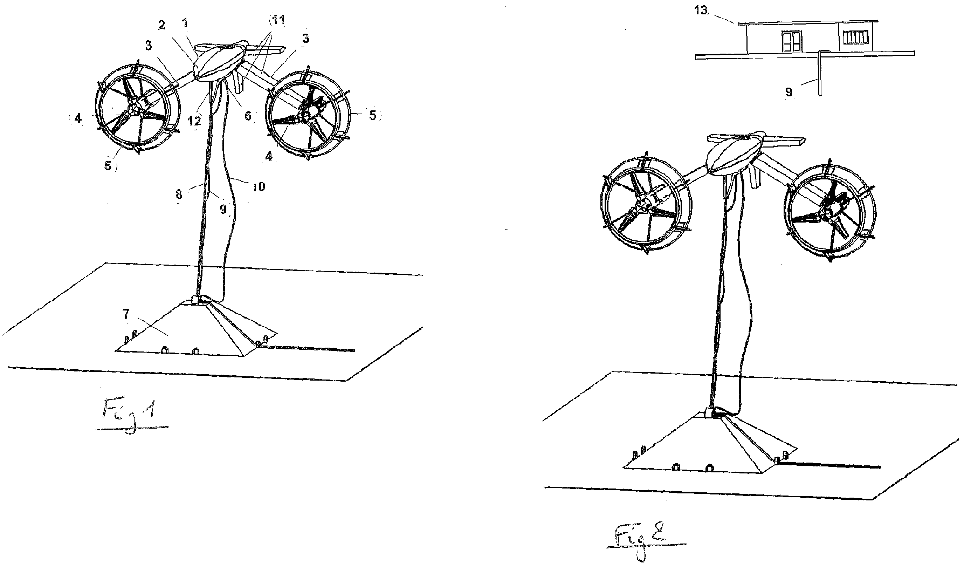

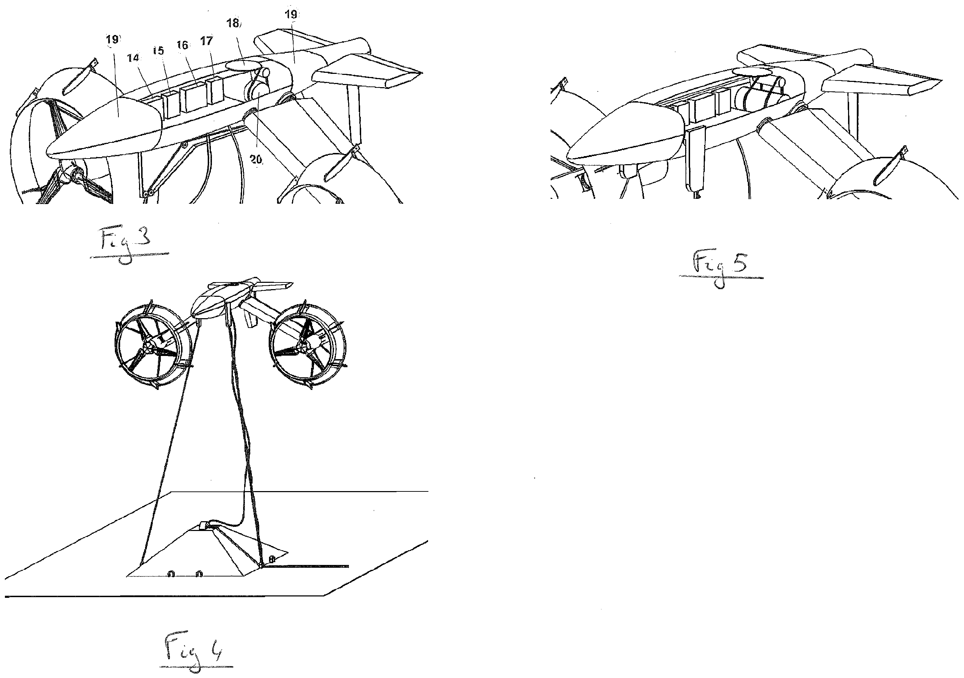

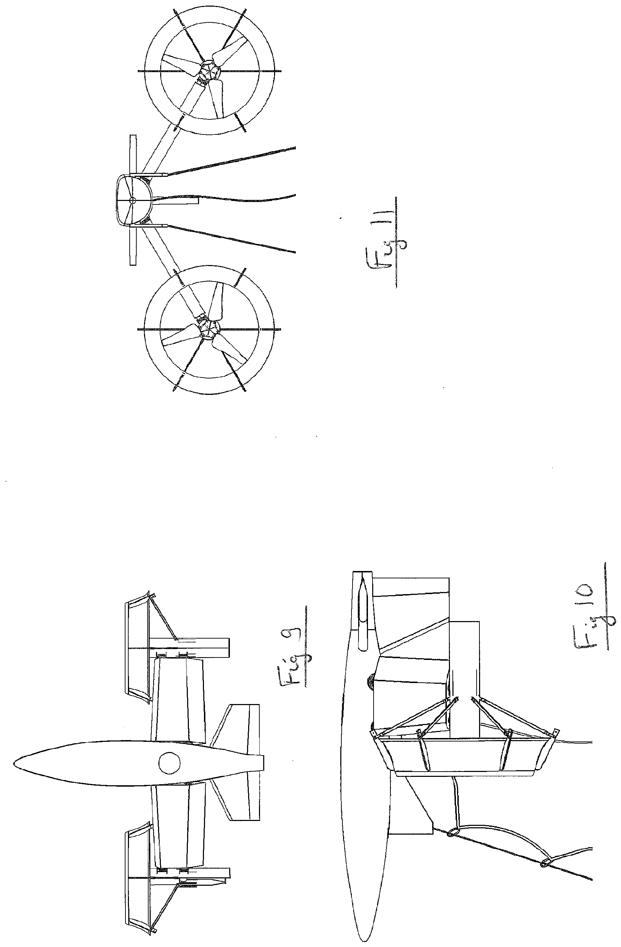

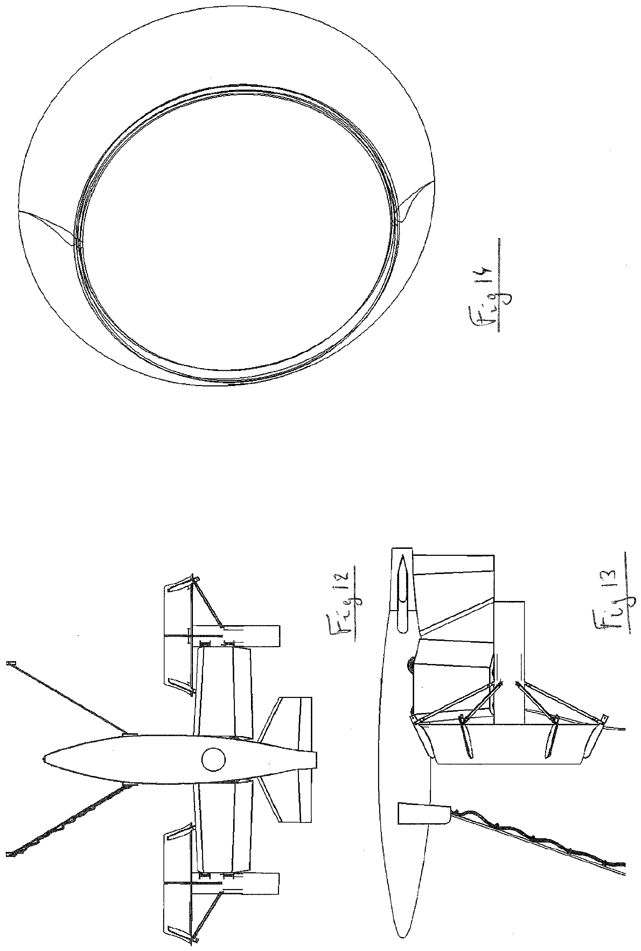

Les figures 1, 2, 3, 8, 9, et 10 mettent en évidence la présente invention dans sa configuration standard ; tandis que les figures 4, 5, 6, 11, 12, et 13 montrent les parties composant la présente invention dans une configuration différente, avec deux câbles d'amarrage.

En faisant référence tout particulièrement à la Figure 1, la station 1 comporte :

- Une coque flottante 1, de forme similaire à un squale ou torpille pour minimiser la résistance hydrodynamique ; la coque est remplie d'un gaz inerte sous pression, dont la fonction est de s'opposer à la pression externe provoquée par la profondeur d'immersion. Une partie de la coque est un compartiment étanche, où seront logés l'ensemble des instruments d'acquisition des données de contrôle, de télémaintenance, de connexion électrique, les batteries d'alimentation du système de manœuvre autonome et tout autre élément électrique.
- Deux traverses latérales 3, possédant des caractéristiques structurelles précises, reliées symétriquement au corps principal, et ayant un profil ailé carénées selon des spécifications propres.
- Un plan de queue 11 à empennage renversé dont la fonction est de permettre à la fois la stabilité longitudinale, et latérale-directionnelle de la station, et par ailleurs, son orientation longitudinale (par rapport à l'axe de tangage) et latérale-directionnelle.

- Deux turbines contrarotatives 4 dotées de deux ou plus de pales reliées à deux générateurs électriques, et assemblées symétriquement sur les flancs de la coque flottante.
- Deux diffuseurs 5, complétés de l'Élément composé de lamelles élément à lamelles, fixés à la structure entourant les turbines.
- Un câble d'amarrage 8, dont une des extrémités est fixée au système d'ancrage.
- Un poids mort 7, posé sur le fond marin, d'une forme et d'un poids suffisant pour permettre de retenir la coque une fois immergée sous la surface de l'eau et sous l'effet de la poussée du courant d'intensité maximum sur le site sélectionné. Lorsque cela est possible, le poids mort sera remplacé par un anneau d'amarrage ancré sur le fond marin.
- Une chaîne de sécurité 10 qui, en cas de rupture soudaine du câble d'amarrage, permet à la station de remonter à la surface sans qu'elle s'éloigne de son lieu d'immersion.
- Un câble électrique 9 qui permet de connecter les générateurs électriques au réseau d'électricité ; ce câble électrique court le long du câble d'amarrage ; il est généralement composé de plusieurs polarités pour permettre le passage de l'électricité vers la terre, ou en sens inverse, de la terre vers la station ; dans le noyau du câble électrique une fibre optique y est prévue pour le transport bidirectionnel des données de direction, les données de fonctionnement ou de dysfonctionnement de la station.

Les caractéristiques techniques propres à la présente invention sont principalement les suivantes :

- Un corps principal, de forme cylindrique, creux, étanche, accessible par une trappe ; le corps principal remplit la fonction d'élément structurel principal et sert à loger des composants électroniques.
- Une coque flottante, formée de la fusion du corps principal avec d'autres corps intrinsèquement flottant, placés à la proue et à la poupe du corps principal, de dimension spécifique afin de permettre la flottaison de l'ensemble de la station, y compris en cas d'inondation intérieure et accidentelle du corps principal. La dite coque flottante est composée de trois parties, voire plus, dont la principale est centrale 1, rendue totalement étanche, accessible à l'homme par une trappe 18, permettant de loger les équipements électromécaniques, tandis que les parties périphériques 2, à la proue et à la poupe avec un empennage renversé, agissent comme des flotteurs grâce à la mousse polymérique 19 remplissant ces parties de la coque, permettant ainsi la flottaison du dispositif dans sa totalité, même en cas d'inondation accidentelle de la partie centrale. La dite coque flottante en forme de fuselage avec un empennage renversé 11 est d'une dimension suffisante afin de permettre la flottaison de toute la station en minimisant la résistance hydrodynamique. La dite coque flottante est composée d'un corps principal étanche comprenant sur chaque flanc de façon symétrique, une structure en métal et en forme d'ailes 3 portant à son extrémité un logement étanche contenant un générateur d'électricité 27 alimenté par la puissance produite par deux turbines contre-rotatives comprenant deux pâles ou plus chacune 4.

La structure métallique est composée de tiges elliptiques, circulaires, carrées ou de toute autre forme et sur cette structure se trouvent deux turbines au minimum et chacune est équipée d'un diffuseur 5 et d'un Élément composé de lamelles élément à lamelles 11. Les deux turbines contrarotatives tournent chacune dans une direction opposée, composées chacune de deux pales ou plus, connectées à deux générateurs électriques assemblés dans les logements prévus à cet effet situés aux extrémités des deux traverses latérales.

Deux diffuseurs, montés autour des deux turbines, ayant une forme spécifique permettant de démultiplier la force du flux actif des eaux sur les pales avec l'adjonction de lamelles autour des diffuseurs. A la base de chaque diffuseur et selon une position précise, un second diffuseur est assemblé sur le premier. Ce second diffuseur est appelé « Élément composé de lamelles » 11 et présente une dimension inférieure au premier et permet d'augmenter les flux d'eau vers les turbines et d'accroitre la puissance de conversion de l'énergie cinétique. Cette partie en forme de type réacteur d'avion permet d'augmenter le flux du courant vers les pales de la turbine améliorant ainsi la puissance de conversion de l'énergie produite.

Un treuil est installé au fond du corps principal de la coque autour duquel s'enroule le câble d'amarrage. Le tambour du treuil est monté dans une section inondée.

Un bloc d'ancrage, posé sur le fond marin, ayant une forme et un poids suffisants pour retenir la station, y compris en situation de totale immersion et sous l'effet de la poussée maximum du courant du lieu sélectionné. Le bloc d'ancrage est auto-submersible, du fait de sa structure creuse et remplie d'air. Il a un poids et un volume adéquats pour lui permettre de flotter. Le corps creux du bloc contient quatre compartiments pouvant être remplies d'eau. Lorsque ces compartiments commencent à se remplir d'eau, le bloc s'alourdit suffisamment pour lui permettre de ne plus flotter et couler sous la surface de l'eau. Il est relié par un câble au treuil se trouvant à l'intérieure de la station, ce qui permet de freiner la vitesse de descente du bloc vers le fond. Une fois positionné au fond, ce bloc se remplit complètement d'eau afin d'atteindre un poids suffisant permettant d'ancrer solidement la station, même sous l'effet de courants de fortes intensités. Le dit bloc d'ancrage revêt une forme pyramidale, le rendant stable en phase de descente et composé de matériaux tels que l'acier, le béton armé ou tout autre matériau possédant des caractéristiques similaires aux matériaux précités. Lorsque le sol marin n'est pas adaptée au bloc d'ancrage la solution de substitution consiste à fixer le câble d'amarrage à un anneau rotatif (tourniquet) enfilé à un piquet scellé sur le fond marin (sableux ou rocheux), ou encore un ancrage composé d'un point de fixation unique scellé sur le fond marin 17.

Un câble d'amarrage est relié au treuil par une extrémité et par l'autre extrémité au bloc d'ancrage. La station conserve un équilibre de flottaison parfait grâce aux effets combinés de la résistance du câble d'amarrage et du courant qui agissent sur son centre de gravité en lui permettant de tourner sur son axe en fonction de l'orientation du courant. Dans les zones de très forts courants la station peut être amarrée au bloc d'ancrage par deux câbles fixés symétriquement sur les flancs de la coque de telle sorte que, en présence de courants de forte intensité, la station tourne sur elle-même pour s'orienter systématiquement et automatiquement dans le sens du courant, et revient à sa position initiale lorsque l'intensité du courant faiblit sous l'effet de la force de torsion qui s'exerce sur les deux câbles.

Un câble électrique permettant de connecter les générateurs électriques au réseau électrique terrestre. Le câble électrique court le long du câble d'ancrage ; il est généralement composé de plusieurs polarités pour permettre la circulation de l'énergie dans les deux sens : de la station vers le réseau terrestre et du réseau terrestre vers la station ; de plus, dans le cœur du câble électrique se trouve un câble en fibre optique permettant de transmettre une double circulation des données, en voie descendante, les données d'analyse opérationnelle et l'état de fonctionnement de la station, en voie ascendante, les données de commande et de pilotage adressées à la station.

Un système de pilotage automatique permettant de positionner automatiquement la station à une profondeur optimale déterminée à partir de la collecte de données relatives aux courants aux moyens de capteurs spécifiques tels que ADCP 14) (en anglais : Acoustic Doppler Current Profiler), capteur de pression 15, hélices de mesure de l'intensité du courant, ainsi qu'une série de capteurs disposés sur l'extérieur de la coque indiquant le niveau de pression et la vitesse du courant en amont et en aval, l'ensemble de ces données sont transmises à une base de données spécifiques interprétées par un programme informatique développé sur mesure dans le but d'établir, à intervalles réguliers, la profondeur optimale à laquelle la station doit se situer et d'actionner automatiquement la mise en fonction du treuil interne qui permet de positionner la station à la profondeur requise .

Un système de contrôle automatique de sa direction /orientation (SAD) aux moyens de capteurs collectant les valeurs émises par la boussole magnétique 16 et la plateforme d'inertie, installées dans le compartiment étanche 17, neutre, suffisamment éloignées de l'influence des composants en métal du dispositif afin d'éviter les erreurs d'indication de la position du dispositif par rapport à l'angle magnétique de la terre, l'ensemble de ces données sont transmises à une base de données et un programme informatique calculant à intervalles réguliers tant l'orientation du dispositif que la direction du courant dominant, le même programme informatique, en situation de courant d'intensité nulle ou faible et selon la vitesse de rotation des turbines, active un signal électromécanique déclenchant la mise en mouvement d'une ou des turbines afin d'orienter la station dans le sens du courant choisi tout en décroisant le câble électrique avec le câble d'ancrage. Une fois l'orientation appropriée atteinte, le même programme informatique, composé d'une base de données relative aux cycles des courants du site, active un signal électromécanique permettant, aux moyens d'une source d'énergie extérieure (courant électrique provenant de la station terrestre) de déclencher la rotation des turbines quelques secondes avant le moment où le courant atteint un niveau d'intensité suffisant pour mettre en œuvre la rotation des turbines par cette seule force. La mise en mouvement des turbines par cette source d'électricité externe permet d'atteindre plus rapidement la vitesse de rotation nécessaire à la conversion d'énergie cinétique en énergie électrique. Lorsque la vitesse de rotation des turbines atteint une valeur déterminée, proche de la limite maximale du générateur électrique, un système de frein permet de maintenir cette vitesse sous le seuil maximum.

La rotation des turbines est ainsi asservie au système de contrôle automatique, pour permettre la mise en mouvement des turbines en situation de courants faibles et pour contrôler la vitesse de rotation en situation de courants forts.

Une chaîne de sécurité, en cas de rupture accidentelle du câble d'ancrage, permet à la station de remonter à la surface en restant à proximité de la zone d'installation choisie.

Des traverses en forme d'aile, un empennage renversé et ailettes qui, en présence de forts courants, créent une poussée vers la surface ; cette poussée ajoutée à la poussée de flottaison, évite que la station soit entrainée vers le fond ; de plus, les profils ailés des traverses s'opposent à d'éventuels déséquilibres causés par des mouvements inattendus de roulis, tangage et embardées.

Une nageoire ventrale antérieure soudée au corps principal, par laquelle est relié le câble d'amarrage.

La station est connectée à une station de collecte des données les rendant disponibles via une connexion Internet permettant d'effectuer des opérations de contrôle et de maintenance à distance.

Les éléments composant la station électrique conforme à la présente invention sont assemblés sur un chantier naval facilitant l'opération de mise à l'eau et le remorquage sur le lieu sélectionné.

De façon naturelle et par sa conception, la station flotte sur la surface de l'eau. Dès lors que le treuil est actionné, la station est entrainée sous la surface de l'eau. La forme et les dimensions de la coque, grâce à l'emplacement du treuil à l'intérieure de la nageoire ventrale antérieure permettent d'assurer une position parfaitement horizontale de la station, quelque soit la force des courants ou même l'absence de courant, la coque de la station, sous l'effet des courants, reçoit une poussée vers le bas à une profondeur qui varie en fonction de la vitesse de ces courants, l'axe principale de la station s'oriente de manière parallèle à la direction des courants et les turbines commencent à tourner, transformant une partie de l'énergie cinétique en énergie mécanique; la présence des diffuseurs de flux facilite le début de la rotation des turbines à un faible niveau de vitesse du courant (< 0,8 m/s), et augmente le coefficient de conversion de l'énergie. Les diffuseurs de flux permettent aussi d'augmenter la vitesse de rotation des pales et donc de réduire le rapport entre le nombre de tours des turbines et la taille des générateurs électriques installés en prise directe. Le mouvement des turbines, à rotation contrarotative permet de contrer la poussée naturelle qui s'exerce sur l'ensemble de la structure et les turbines peuvent ainsi fournir de l'énergie au générateur avec une contrainte moindre.

La station électrique est activée par un courant d'eau et comprends des diffuseurs et un système de manœuvre à distance. Elle peut se présenter selon deux configurations avec l'utilisation d'un ou deux câbles d'amarrage selon le lieu des sites choisis et la nature des courants marins.

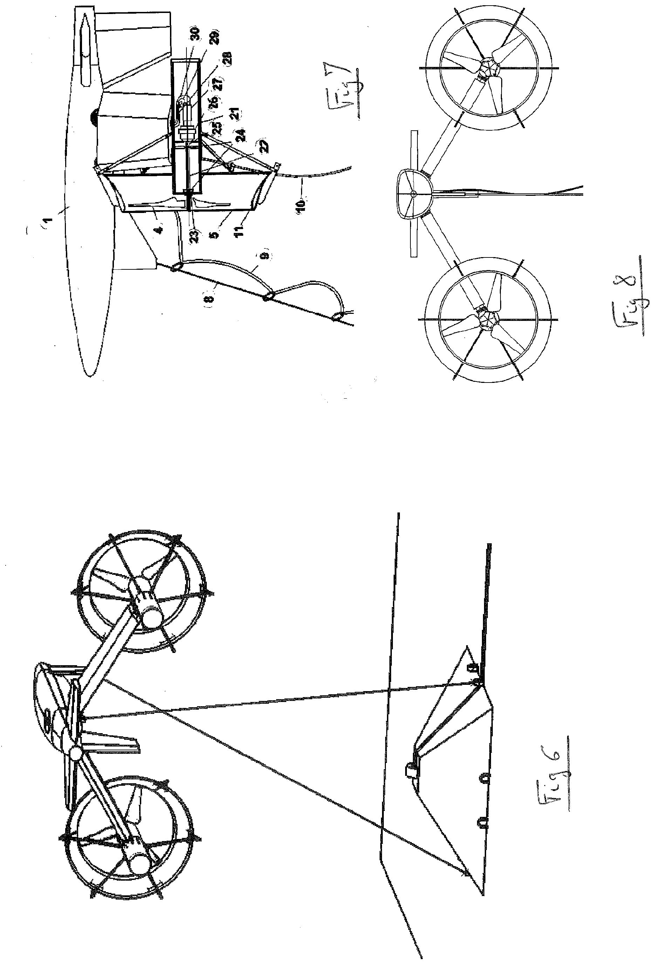

En faisant référence à la figure 7, la station est composée des principaux éléments suivants :

Une coque principale flottante 1
Les pales 4
Les diffuseurs 5
Le câble d'ancrage 8
Le câble électrique 9
La chaîne de sécurité 10
Les ailettes 11
La structure de logement 21 des éléments suivants :

     L'arbre 22
     Joints de garniture 23
     Les coussinets (radiaux et de soutien) 24
     Le couplage 25
     Le multiplicateur de tours 26
     Le générateur d'électricité 27
     Le câble électrique de puissance 28
     Le circuit de refroidissement 29
     Le câble d'encodage 30

La Figure.4 représente une légère variante de la station par rapport à celle représentée dans la Figure1. En effet, la station est ancrée à un poids mort par le biais de deux câbles d'amarrage reliés à deux nageoires ventrales antérieures soudées symétriquement sur les flancs du corps principal. Le système d'amarrage ainsi composé de deux câbles représente un système passif évitant leur entrelacement et remplace le système de contrôle automatique de la position ; tous les autres composants restent les mêmes.

En présence d'un courant d'eau de faible intensité (à peine supérieure à 0,2 m/s) la station tourne sur son axe principal suivant la direction du courant dominant ; sous l'effet de la rotation, les deux câbles se croisent et forment un « X » comme l'illustre la Figure.6 ; dès que le courant d'eau diminue d'intensité pour atteindre une valeur inférieure à 0,2 m/s, en raison de la double tension créée par les deux câbles sur les nageoires ventrales antérieures, la station effectue une rotation sur son axe principal en sens inverse, en s'orientant dans la direction originale. Ce système permet d'éviter l'entrelacement de la chaîne de sécurité avec le câble électrique ; ainsi, le système opère de manière passive la même action que celle réalisée par le système de contrôle automatique illustré par le paragraphe précédent ; toutefois ce système anti-entrelacement ne remplace pas la fonction de pré alignement de la station avec un courant d'eau qui serait en formation. Ce système comporte deux câbles avec un double treuil permettant l'enroulement des deux câbles, illustré dans la Figure 5.

En faisant tout particulièrement référence à la Figure 4, montrant une variante adaptée pour la présence de courants d'eau plus intenses. A part le dispositif de double câble, les composants de la station restent les mêmes que dans la configuration précédente.

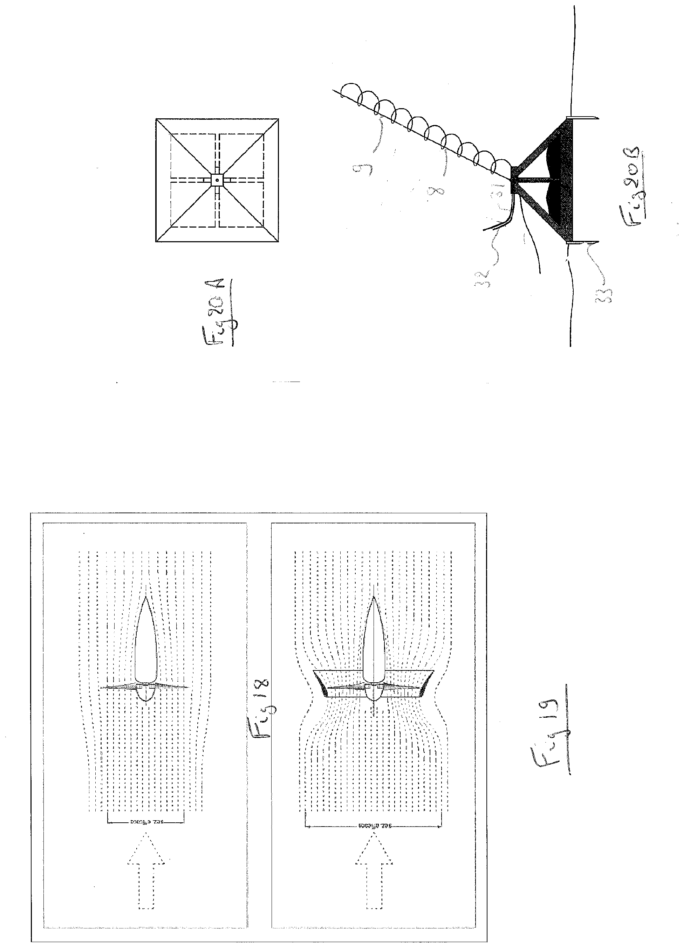

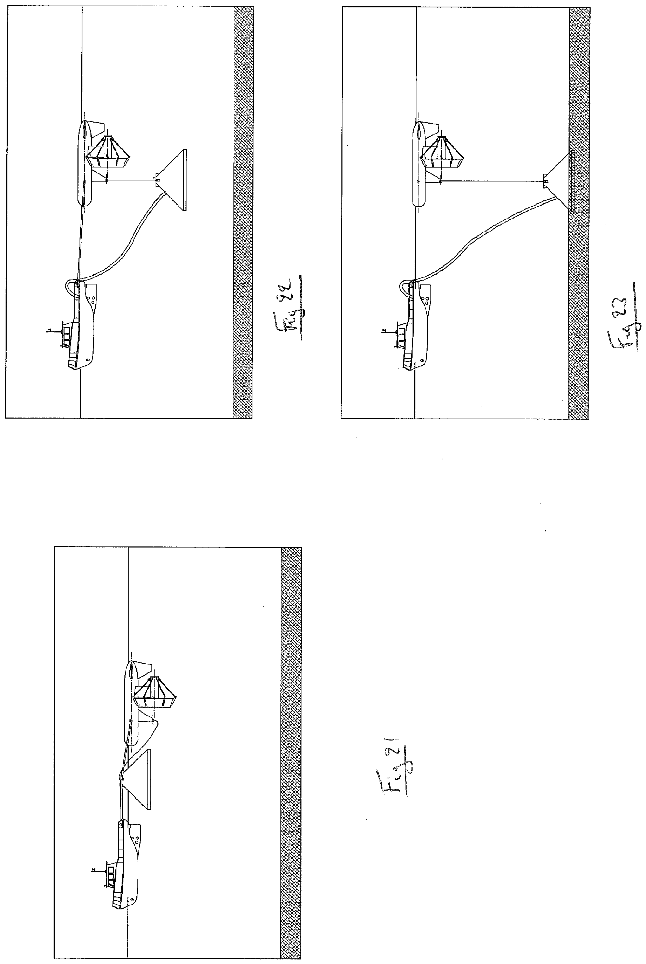

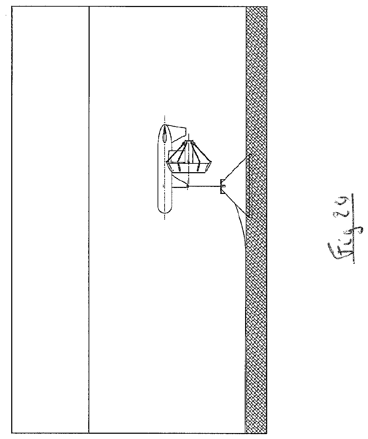

La station comporte des moyens pour faciliter l'ancrage de la station au fond et, par voie de conséquence, réduire le coût de l'opération d'ancrage de la station sur le site choisi. A cette fin, la station est associée à un bloc d'ancrage auto-submersible tel qu'illustré par la figure 20. Le bloc d'ancrage est constitué d'un corps creux, flottant, de dimension et d'un poids adéquat afin de lui permettre de flotter, d'un tuyau propulsant de l'air pour assurer l'évacuation de l'eau 31 et un tuyau d'aspiration de l'air d'air assurant le remplissage en eau 32, ainsi que 4 pieux 33 assurant la stabilisation de l'ancrage en présence de fonds marins sableux. Ainsi, tel qu'illustré dans les figures 21 - 22 -23 et 24, le bloc d'ancrage est remorqué par voie maritime en même temps que la station. Une fois relié au site d'ancrage prévu, le bloc d'ancrage est partiellement rempli d'eau de mer, jusqu'à un niveau suffisant, permettant de commencer sa descente vers les fonds marins. Le câble d'ancrage, le câble électrique et la chaine de sécurité préalablement fixés au bloc se déroulent au fur et à mesure en accompagnant la descente du dit bloc.

Lorsque le bloc d'ancrage atteint le fond marin, il se remplit complètement d'eau de mer et s'alourdit considérablement, ce qui va lui permettre d'ancrer solidement la station dans la zone choisie même en présence de forts courants. Selon les caractéristiques géologiques du fond marin (roche, sable, vase,...) il sera nécessaire ou non de planter autour de la base du bloc d'ancrage, des pieux de formes et de longueurs appropriés permettant ainsi de fixer le bloc pour prévenir tout déplacement par glissement inattendu.

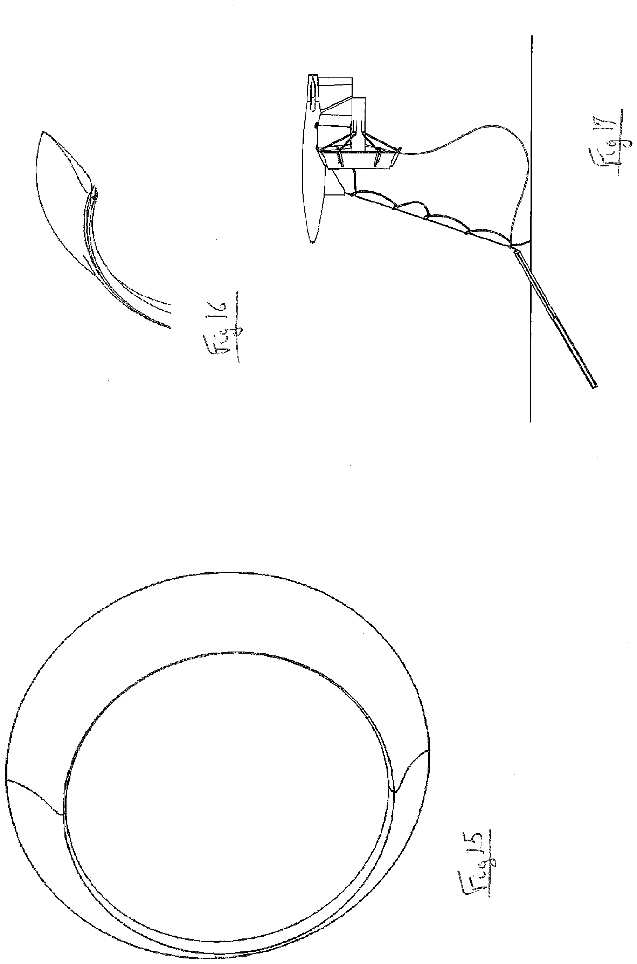

Une fois le bloc installé sur le fond marin, le treuil est actionné pour enrouler le câble qui le relie au bloc afin d'entrainer la station vers le fond jusqu'à la profondeur choisie. A noter qu'en présence d'un fond marin idoine, il sera possible de privilégier une solution d'ancrage fixe au moyen d'un anneau vissé dans le plancher marin Figure 17. Le câble d'amarrage, le câble électrique et le câble de sécurité seront reliés à l'anneau d'ancrage fixé au fond.

La Figure 20 représente le corps d'encrage en forme pyramidale en béton armé qui comprend quatre caissons en acier. Les quatre chambres en acier sont reliées entre elles à leur base et au sommet de la pyramide. Comme l'illustre la Figure 20, les quatre canaux situés à la base sont connectés à un tube servant à pomper l'eau à l'intérieur 31 ; tandis que les quatre canaux au sommet sont connectés à un autre tube servant à évacuer l'air 32. Les actions consistant à ajouter de l'air ou à l'évacuer entraînent automatiquement soit l'évacuation de l'eau, soit le remplissage du bloc en eau de mer.

En référence aux figures 21 à 24, la mise en service se déroule suivant les phases suivantes :

- Mise à l'eau du bloc d'ancrage qui, grâce à sa propriété de type coque flottante, flotte à la surface ; la station et ce bloc sont reliés ensemble par un câble d'ancrage (enroulé autour du treuil de la station), une chaîne de sécurité et un câble électrique ;
- Remorquage du bloc et de la station jusqu'au site choisi en utilisant un remorqueur ; le câble électrique est d'une longueur suffisante pour lui permettre de relier la station au réseau électrique terrestre, il se déroule progressivement à partir d'une bobine installée sur le remorqueur ;
- Remplissage partiel avec de l'eau de mer du bloc d'ancrage, jusqu'à un niveau permettant de l'alourdir pour supprimer l'effet de flottaison et l'immerger jusqu'au fond, le bloc emporte avec lui le câble d'ancrage qui, enroulé autour du treuil situé à l'intérieure de la station, se déroule au fur et à mesure de la descente; Une fois posé sur le fond la totalité de l'air présent dans le bloc s'évacue pour laisser l'eau le remplir;
- Retour du remorqueur au port, connexion du câble électrique au réseau terrestre de transformation qui recevra l'électricité produite par la station ;
- Mise en fonctionnement du treuil qui tend le câble d'amarrage permettant le positionnement de la station à la profondeur choisie ;
- Mise en service de la station et début du cycle de production d'énergie électrique.

Les applications industrielles de l'invention sont multiples et ont l'avantage de représenter un coût de fabrication, installation et maintenance relativement bas par rapport aux hydroliennes traditionnelles. D'un point de vue écologique, ce dispositif crée de l'énergie renouvelable sans détériorer les fonds marins. En outre, il permet de capter un courant assez faible et de fournir de l'énergie bon marché dans les pays émergents possédant des grands fleuves ou le long de leurs côtes lorsqu'il y des marées.

## Revendications

**1.** Dispositif du type hydrolienne, activée par un courant de fluide liquide, tel que des courants marins ou fluviaux, pour produire de l'énergie électrique, comportant :

- une coque flottante (1) ;
- au moins une turbine (4) susceptible d'être entrainée en rotation par le fluide en mouvement ;
- un générateur d'électricité (27) entrainé par la turbine (4) et apte à être relié à un réseau de distribution d'électricité ;
- au moins un diffuseur formant un mélangeur de flux, de forme annulaire centré sur la turbine (4) et entourant celle-ci

**caractérisé en ce qu'**il comporte deux turbines (4) contre-rotatives comprenant au moins deux pâles chacune, lesdites turbines étant entourées par un premier diffuseur annulaire (5), et **en ce que** le premier diffuseur (5) est entouré par un second diffuseur se présentant sous la forme d'ailettes radiales fixées à la périphérie dudit premier diffuseur (5) et dépassant axialement à l'arrière de ce dernier.

**2.** Dispositif selon la revendication 1, **caractérisé en ce que** ladite coque flottante (1) est en forme de fuselage et est reliée à chaque turbine (4) par un bras ou aile (3).

**3.** Dispositif selon l'une quelconque des revendications 1 à 2, **caractérisé en ce que** la coque flottante (1) comporte à l'arrière un empennage inversé (11).

**4.** Dispositif selon l'une quelconque des revendications 1 à 3, **caractérisé en ce que** la coque flottante (1) est composée d'au moins trois parties, à savoir d'une part une partie principale centrale, creuse et étanche, et d'autre part au moins deux parties périphériques (2), à la proue et à la poupe et agissant comme des flotteurs.

**5.** Dispositif selon l'une quelconque des revendications 1 à 4, **caractérisé en ce qu'**il comporte un moyen d'ancrage sur le fond marin ou le lit du fleuve, comportant un bloc submersible, comprenant au moins un compartiment (17) pouvant être rempli d'eau.

**6.** Dispositif selon l'une quelconque des revendications 1 à 5, **caractérisé en ce qu'**il comporte un système de pilotage automatique permettant de positionner automatiquement le dispositif à une profondeur optimale déterminée à partir de la collecte de données relatives aux courants aux moyens de capteurs, tels que ADCP (Acoustic Doppler Current Profiler), ou mesurant la pression, l'intensité du courant, la vitesse du courant.

**7.** Dispositif selon l'une quelconque des revendications précédentes, **caractérisé en ce que** la coque flottante (1) est attachée au moyen d'ancrage par deux câbles (8) fixés symétriquement sur les flancs de la coque, de façon à permettre rotation de la coque sur elle-même en vue de son orientation automatique dans le sens du courant, et le retour de celle-ci à sa position initiale lorsque l'intensité du courant faiblit sous l'effet de la force de torsion qui s'exerce sur les deux câbles.

## Patentansprüche

**1.** Vorrichtung vom Typ Meeresströmungskraftwerk, aktiviert durch eine Strömung von flüssigem Fluid wie Meeres- oder Flussströmungen, zum Produzieren von elektrischem Strom, Folgendes umfassend:

- eine schwimmende Verschalung (1);
- wenigstens eine Turbine (4), dafür ausgelegt, durch die sich bewegende Strömung in Rotation versetzt zu werden;
- einen Stromgenerator (27), durch die Turbine (4) angetrieben und geeignet, an ein Stromverteilungsnetz angeschlossen zu werden;
- wenigstens einen Diffusor, einen Strömungsmischer bildend, in Ringform auf der Turbine (4) zentriert und diese umschließend

**dadurch gekennzeichnet, dass** sie zwei gegenläufig rotierende Turbinen (4) umfasst, jeweils wenigstens zwei Blätter umfassend, wobei die Turbinen von einem ersten ringförmigen Diffusor (5) umschlossen sind, und dadurch, dass der erste Diffusor (5) von einem zweiten Diffusor umschlossen ist, eine Form von radialen Flügeln aufweisend, in der Peripherie des ersten Diffusors (5) fixiert und axial hinter letzterem hervorstehend.

**2.** Vorrichtung nach Anspruch 1, **dadurch gekennzeichnet, dass** die schwimmende Verschalung (1) als Rumpf ausgebildet ist und mit jeder Turbine (4) durch einen Arm oder Flügel (3) verbunden ist.

**3.** Vorrichtung nach einem der Ansprüche 1 bis 2, **dadurch gekennzeichnet, dass** die schwimmende Verschalung (1) hinten ein umgekehrtes Leitwerk (11) umfasst.

**4.** Verfahren nach einem der Ansprüche 1 bis 3, **dadurch gekennzeichnet, dass** die schwimmende Verschalung (1) wenigstens aus drei Teilen besteht, nämlich einerseits einem zentralen Hauptteil, hohl und dicht, und andererseits zwei peripheren Teilen (2), am Bug und am Heck und als Schwimmkörper fungierend.

5. Vorrichtung nach einem der Ansprüche 1 bis 4, **dadurch gekennzeichnet, dass** sie ein Mittel zur Verankerung am Meeresboden oder dem Flussbett enthält, umfassend einen Tauchblock, umfassend wenigstens eine Kammer (17), die mit Wasser gefüllt werden kann.

6. Verfahren nach einem der Ansprüche 1 bis 5, **dadurch gekennzeichnet, dass** es ein System zur automatischen Steuerung umfasst, das es erlaubt, die Vorrichtung automatisch in einer optimalen Tiefe zu positionieren, bestimmt anhand der Sammlung der Daten in Bezug auf die Strömungen durch die Sensormittel wie ADCP (Acoustic Doppler Current Profiler), oder Messen des Drucks, der Intensität der Strömung, die Geschwindigkeit der Strömung.

7. Vorrichtung nach einem der vorhergehenden Ansprüche, **dadurch gekennzeichnet, dass** die schwimmende Verschalung (1) an dem Verankerungsmittel über zwei Kabel (8), symmetrisch an den Flanken der Verschalung fixiert, befestigt ist, sodass Rotation der Verschalung um sich selbst zwecks ihrer automatischen Orientierung in Richtung der Strömung ermöglicht wird sowie ihre Rückkehr in ihre anfängliche Position, wenn die Intensität der Strömung unter der Einwirkung der Torsionskraft schwächer wird, die auf die beiden Kabel ausgeübt wird.

## Claims

1. A water turbine-type device, activated by a current of liquid fluid, such as sea or river currents, to produce electrical energy, including:

   - a floating shell (1);
   - at least one turbine (4) capable of being rotated by the moving fluid;
   - an electricity generator (27) driven by the turbine (4) and capable of being connected to an electricity distribution network;
   - at least one diffuser forming a flow mixer, of annular shape centred on the turbine (4) and surrounding the latter **characterised in that** it includes two counter-rotating turbines (4) comprising at least two blades each, said turbines being surrounded by a first annular diffuser (5), and **in that** the first diffuser (5) is surrounded by a second diffuser in the form of radial fins fastened to the periphery of said first diffuser (5) and extending axially to the rear of the latter.

2. The device according to claim 1, **characterised in that** said floating shell (1) is in the shape of a fuselage and is connected to each turbine (4) by an arm or flange (3).

3. The device according to any one of claims 1 to 2, **characterised in that** the floating shell (1) includes at the rear an inverted tail (11).

4. The device according to any one of claims 1 to 3, **characterised in that** the floating shell (1) is composed of at least three parts, namely on the one hand a main central part, which is hollow and sealed, and on the other hand at least two peripheral parts (2), at the bow and at the stern and acting as floats.

5. The device according to any one of claims 1 to 4, **characterised in that** it includes means for anchoring on the seabed or the river bed, including a submersible block, comprising at least one compartment (17) which can be filled with water.

6. The device according to any one of claims 1 to 5, **characterised in that** it includes an automatic piloting system allowing to automatically position the device at an optimal depth determined from the collection of data relating to the currents by means of sensors, such as ADCP (Acoustic Doppler Current Profiler), or measuring the pressure, the current intensity, the current speed.

7. The device according to any one of the preceding claims, **characterised in that** the floating shell (1) is attached to the anchoring means by two cables (8) symmetrically fastened on the sides of the shell, so as to allow rotation of the shell on itself to automatically orient it in the direction of the current, and return it to its initial position when the current intensity weakens under the effect of the torsional force which is exerted on the two cables.

Fig. 2

Fig. 1

Fig 5

Fig 3

Fig 4

Fig. 7

Fig. 8

Fig. 6

Fig 11

Fig 9

Fig 10

Fig 14

Fig 12

Fig 13

Fig 16

Fig 17

Fig 15

Fig 20 A

Fig 20 B

Fig 18

Fig 19

Fig 22

Fig 23

Fig 21

Fig 24

## RÉFÉRENCES CITÉES DANS LA DESCRIPTION

### Documents brevets cités dans la description

- US 3986787 A
- US 2007241566 A1
- US 6168373 B1
- GB 2460309 A
- US 2501696 A